# EUROPEAN PATENT APPLICATION

(11) **EP 2 541 544 A1**
(43) Date of publication of application: **02.01.2013**
(21) Application number: 11305843.2
(22) Date of filing: 30.06.2011
(51) Int. Cl.: G10L 15/06, G11B 27/11, H04M 1/725, G06F 3/16

(54) **Voice sample tagging**

(71) Applicant: France Télécom, 75015 Paris (FR)
(72) Inventor: Guillou, Aurélien, London, TW9 2JB (GB); Sandeep Das, Reshma, London, RG1 2GW (GB); Uddin, Rafel, Morden, Surrey SM4 4HU London (GB)
(74) Representative: Cabinet Plasseraud

## Description

The present invention generally relates to construction of acoustic models.

It finds applications, in particular while not exclusively, in voice recognition devices, speech to text or text to speech converting devices, in mobile phones or in servers storing acoustic models.

A voice bank consists in an aggregation of personal voice samples, obtained from recorded speech of different users. The voice samples can be stored in a specific database for further use with a Text To Speech (TTS) engine or with an Automatic Speech Recognition (ASR) engine, for example. Indeed, a voice bank can be used by a TTS engine to build a personal TTS speech model, using corpus-based TTS engine for example.

ASR is a technology that allows a computer to identify words that a person speaks into a microphone of a mobile phone for example. ASR engines require two types of files to recognize speech:
- an acoustic model, which is created by taking audio recordings of speech and their transcriptions taken from a speech corpus and by compiling them into statistical representations of sounds that make up each work, which can be obtained by a process called 'training';
- a language model or a grammar file.

A language model is a file containing probabilities of sequences of words. Language models are used for dictation applications, whereas grammar files are used in desktop command and control or telephony interactive voice response (IVR) type applications. A grammar file is a much smaller file containing sets of predefmed combinations of words.

TTS synthesis is an artificial way of producing human speech. A computer system used for this purpose is called a speech synthesizer and can be implemented in software or hardware. A TTS engine converts a normal language text into speech.

Some ASR engines require speaker enrolment, meaning a user provides samples of his speech before using them. Such engines are called speaker dependent. In speaker independent engines, no enrolment is required.

With corpus-based TTS technology, generating a synthesized voice can consists in concatenating sound units from phonemes, which are stored in a speech database. The speech database is built from speech and text data (the speech corpus) extracted from a 'training' session, during which a user can pronounce several predefined sentences. A prosodic model and a speech database are generated from the speech corpus. At runtime, the TTS engine uses both the prosodic model and the speech database in order to generate a right voice waveform.

Prosody is the rhythm, stress and intonation of speech. Prosody may reflect various features of the speaker or the utterance such as the emotional state of the speaker, the form of utterance (statement, question or command), the presence of irony or sarcasm, emphasis contrast, focus, or other elements of language that may not be encoded by grammar or choice of vocabulary.

A first example of a speech synthesis is the Hidden Markov Model (HMM) based speech synthesis, which is robust to non-ideal speech data that are recorded under various conditions and with varying microphones that are not always clean and that often lack phonetic balance. In addition, speaker adaptive HMM based speech synthesis is efficient in the sense of footprint. Compared with corpus based TTS engines, the footprint of HMM based speech synthesis engines is usually smaller because statistics about sub word models are stored rather than templates of the sub word units. Furthermore, the statistics of the sub word models in the speaker adaptive HMM based speech synthesis (i.e. average voice models) is speaker-independent and thus can be shared among an arbitrary group of speakers. The speaker dependent footprint is only a set of transforms used for speaker adaptation.

However, in such engines, statistics are calculated based on the voice samples received from a recording device of the speaker. Determination of statistics requires heavy calculations for a server receiving the voice samples and even for robust engines, it depends on the conditions in which voice samples are recorded (noise level), thus leading to misinterpretations of the samples.

To address these needs, a first aspect of the invention relates to a method for generating a tagged voice sample carried out by an audio recording unit. The method comprises:
- a step of recording a voice sample from a user of the audio recording unit;
- a step of suggesting at least one tag to be associated with the voice sample to the user;
- upon selection by the user of a suggested tag, a step of associating at least the selected tag with the voice sample.

The present invention enables a user to define tags, while he is recording voice samples. The tags are then associated with the voice samples, thus avoiding further calculations to determine features of the voice samples. In addition, the reliability of the tag is high, as it is defined by the user. Such tagged voice samples can then be grouped depending on common tags for example, and can be representative of the situation during which the user has recorded the voice samples or more broadly representative of a voice profile. A voice profile can be a set of a server (i.e. a voice bank), which gathers voice samples from users, speech recognition model specifically trained by voice samples from the users and a speech synthesis model built from voice samples extracted from the voice bank.

According to some embodiments of the invention, the audio recording unit further comprises at least one sensor, the sensor being adapted to acquire sensible data and the suggested tag is determined based on the sensible data.

Such embodiments enable to suggest a shortened list of tags to the user, the tags of the list being determined based on sensible data acquired by sensors of the audio recording unit. This enables improving the convenience of the selection for the user, who can choose a tag among relevant propositions, as the tags have been previously filtered by the sensible data acquired from the sensors.

In complement, the sensible data can be an environmental noise level.

Thus, based on the tag corresponding to an environmental noise level, a quality degree of the voice samples can be implied. If the noise level is low, the information contained in the voice samples is more relevant than if the noise level is high.

Still in complement, if the environmental noise level is above a predefined threshold, the previous steps of the method can be restarted.

Such embodiments enable obtaining only relevant voice samples, which can be further used for training of a voice model for example.

Alternatively, the sensible data can be relative to a mobility of the audio recording unit and the suggested tag relates to a location of the user.

Such embodiments propose a new type of tag, which relates to the location of the user. For example, the sensors can detect a high speed of the user, and can thus imply that he is in the metro, the car, the train etc. Then, the tags "in the metro", "in the car" or/and "in the train" can be suggested to the user so that he selects the right one.

In some embodiments, a profile of the user is stored on the audio recording unit, the profile comprising at least one personal tag associated with the user, and the method further comprises associating the personal tag with the voice sample.

Such embodiments enable to determine predefined tags to be associated with the voice samples of the audio recording unit. For example, if the audio recording unit belongs to a French man, the tags "French accent" and "male" can be systematically associated with the recorded with samples, without disturbing the user by suggesting these tags, which always remain the same.

According to embodiments of the invention, the audio recording unit is adapted to record a voice sample according to a plurality of modes, each mode being associated with a mode tag, the method comprises recording a voice sample from a user of the audio recording unit according to a first mode among the plurality of modes and the mode tag of the first mode is associated with the voice sample.

These embodiments enable to have voice samples, which are identified as being representative of a given mode of recording. For example, a voice sample acquired during a phone call and a voice sample acquired during a text dictation can be identified.

In some embodiments, the audio recording unit further comprises at least one sensor, the sensor being adapted to acquire sensible data, and the method further comprises inferring an activity based on the sensible data, determining a detected tag based on the inferred activity of the user and associating the detected tag with the voice sample.

These embodiments enable to automatically determine tags to be associated with the recorded voice samples. Indeed, some sensor measures can determine with accuracy an activity related to the user, and it is thus not necessary to suggest several tags to the user. It is noted that these embodiments are a second independent aspect of the invention. Indeed, the invention also relates to a method for generating a tagged voice sample carried out by an audio recording unit, the audio recording unit comprising at least one sensor, the sensor being adapted to acquire sensible data, the method comprising:
- a step of recording a voice sample from a user of the audio recording unit;
- a step of inferring an activity based on the sensible data,
- a step of determining a detected tag based on the inferred activity of the user
- a step of associating at least the selected tag with the voice sample.

According to some embodiments, the sensible data can relate to an environment noise level. Thus, based on the tag corresponding to an environmental noise level, a quality degree of the voice samples can be implied. If the noise level is low, the information contained in the voice samples is more relevant than if the noise level is high.

A third aspect of the invention concerns a computer program product recorded on a storage medium and executable by a computer in the form of a software agent including at least one software module setup to implement the method according to any one of the embodiments of the first aspect of the invention.

A fourth aspect of the invention refers to an audio recording unit comprising :
- means for recording a voice sample from a user of the audio recording unit;
- means for suggesting at least one tag to be associated with the voice sample to the user;
- means for associating, upon selection of a tag by the user, at least the selected tag with the voice sample.

The present invention is illustrated by way of example, and not by way of limitation, in the figures of the accompanying drawings, in which like reference numerals refer to similar elements and in which:
- Figure 1 represents a system comprising an audio recording unit and a voice signature server, according to some embodiments of the invention;
- Figure 2 illustrates a detailed representation of the audio recording unit represented on Figure 1;
- Figure 3 represents a flowchart representing the steps of a method for storing tagged voice samples in data banks according to some embodiments of the invention;
- Figure 4 represents a data base structure of the voice banks according to some embodiments of the invention;
- Figure 5 represents a system for partitioning tagged voice samples according to some embodiments of the invention;
- Figure 6 illustrates a flowchart representing the steps of a method for updating acoustic models based on tagged voice samples, according to some embodiments of the invention.

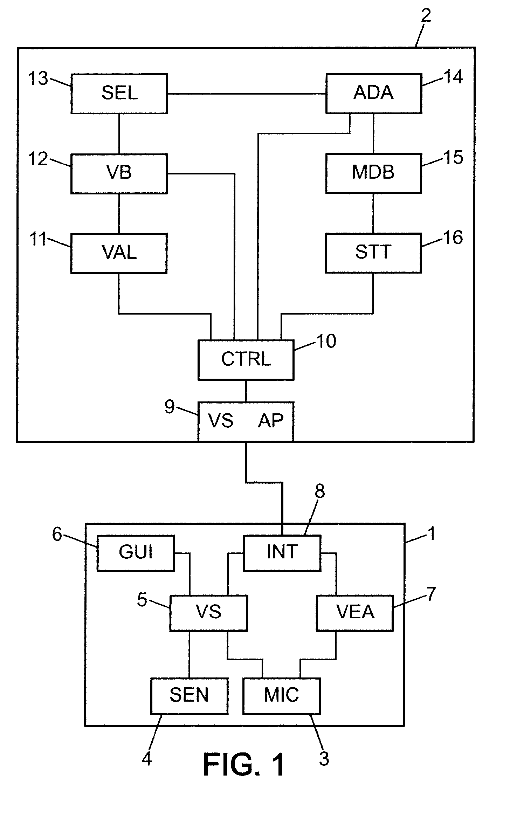

Referring to Figure 1, there is shown a system according to some embodiments of the invention. The system comprises an audio recording unit 1 and a voice signature server 2.

The audio recording unit 1 can be a mobile phone for example and comprises a microphone 3, sensors 4, a voice signature unit 5, a Graphical User Interface (GUI) 6, a voice enable unit 7 and an interface 8.

The voice signature server 2 comprises Voice Signature Application Programming Interfaces (APIs) 9, a controller 10, a sample validation unit 11, voice banks 12, a selection unit 13, an adaptation unit 14, a model data base 15, and a Speech To Text (STT) engine 16.

The audio recording unit 1 can communicate with the voice signature server 2 via its interface 8, which can access to a Wi-Fi network for example.

The microphone 3 is adapted to acquire voice samples from a user of the audio recording unit 1. To this end, a plurality of applications can run on the audio recording unit 1. For example, in the case of a mobile phone, voice samples can be acquired during phone calls, during voice commands or in the context of a text dictation. No restriction is attached to the application by which the voice samples are acquired according to the invention.

The acquired voice samples can follow a predefined text script for text dependent technologies, or any text for text independent technologies. The WAVe form audio file format (WAV) can be preferred instead of a high-compression format such as MP3.

During recording of voice samples by the microphone 3, sensors 4 are adapted to acquire sensible data that will enable to determine the current user's environment, i.e. application context, location and velocity of the user, eventual background speakers, noise level etc. According to the invention, the voice samples can then be tagged with several tags. For example, the following tags can be deduced for a given sample: location = "at home"; environment = "quiet"; accent = "French".

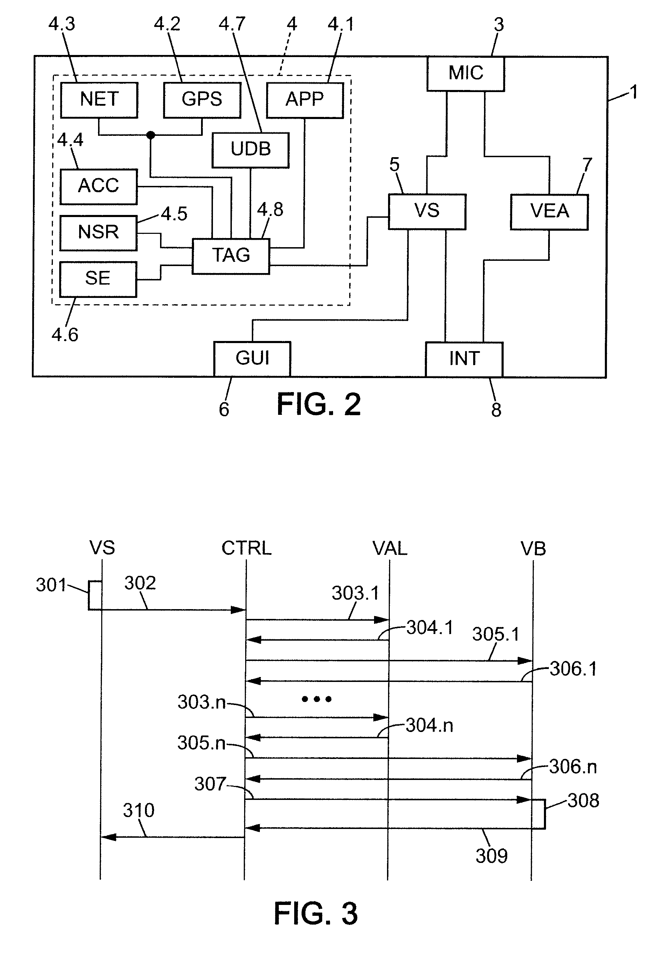

Referring to Figure 2, there is shown the audio recording unit 1 according to some embodiments of the invention.

As it has been detailed before, the audio recording unit comprises the microphone 3, the sensors 4, the voice signature unit 5, the Graphical User Interface (GUI) 6, the voice enable unit 7 and the interface 8.

The sensors 4 can comprise an application unit 4.1, a Global Positioning System (GPS) 4.2, a network location unit 4.3, an accelerometer 4.4, a noise level sensor 4.5, other sensors 4.6, a user database 4.7 and a tag generator 4.8.

The application unit 4.1 is adapted to determine which application of the audio recording unit 1 is currently recording voice samples and to generate an identifier of the determined application to be transmitted to the tag generator 4.8. For example, the application unit 4.2 can generate an identifier of a phone call application, of a text dictation application, of voice command application or of other applications.

The GPS 4.2 is able to determine the localisation and the velocity of the user (of the audio recording unit 1) and to transmit this information to the tag generator 4.8. Depending on the localisation and velocity, the tag generator 4.8 can determine that the user is at home or is moving.

The network location unit 4.3 is adapted to determine if the audio recording unit 1 is connected to a given network. For example, if the audio recording unit is connected to a Wi-Fi home network of the user, this information (which implies that the user is at home) can be transmitted to the tag generator to tag the voice samples with a "at home" tag, for example.

The accelerometer 4.4 is adapted to provide information concerning the velocity of the user to the tag generator 4.8. For example, depending on a calculated speed of the user, the tag generator 4.8 can determine if the user is walking, is in the car or in the metro, is static.

The noise level sensor 4.5 is adapted to measure a noise level of the environment of the audio recording unit 1 and to transmit the noise level to the tag generator 4.8. Based on the noise level, the tag generator 4.8 can generate a "quiet" tag if the noise level is below a first threshold or a "noisy" tag if the noise level is above a second threshold.

The other sensors 4.6 can measure other characteristics of the environment so that the tag generator 4.8 can generate complementary tags.

The user database 4.7 can store some information concerning the user of the audio recording device 1. For example, it can store an identifier of the user (name and first name for example), the age, the gender, the nationality and the language of the user. This information can be used by the tag generator 4.8 to tag the voice samples with tags such as "male", "female", "French", "Indian", "20 to 30 years old", etc. Alternatively, this information can be stored in the voice signature server 2.

The tag generator 4.8 is adapted to determine tags to be associated with the voice samples based on the data acquired by the sensors 4. As already stated, tags can characterise voice characteristics such as the accent (English UK, Scottish, Irish Indian, French, etc), the gender (male or female), the environment (at home, in the street, in the car, in the train, others). These tags can be forwarded to the voice signature unit 5.

It is also noted that according to some embodiments of the invention, the tag generator 4.8 cannot determine precisely a given tag. However, based on the data acquired by the sensors, the tag generator 4.8 can infer a set of potential tags.

One tag among the set of potential tags can then be selected by the user of the audio recording unit 1 via the GUI 6. No restriction is attached to the way the set of tags is presented to the user and to the way a tag is selected among the set of tags.

For example, when the accelerometer or the GPS detects that the user is moving, a tag list comprising "in the street", "in the car", "in the train", can be displayed on the GUI 6 for example. The user can then select the right tag corresponding to his location, and this tag is associated with the recorded voice samples. No restriction is attached to when the selection is made. For example, according to some embodiments, the user selects the right tag before recording the voice samples. In other embodiments, the selection of the right tag is performed by the user after recording the voice samples.

Referring back to Figure 1, the tagged voice samples are forwarded to the interface 8, which transmits them to the Voice Signature APIs 9 of the voice signature server 2. The Voice Signature APIs 9 forward the tagged voice samples to the controller 10. Voice Signature APIs can be exposed as Web Services, such as REpresentational State Transfer APIs (REST APIs), which can be called either from a browser or from a standalone application for example. The network protocol can be HyperText Transfer Protocol (HTTP).

The controller 10 is in charge of checking user permissions as well as request validity and is the mains access point of the voice signature server 2. The controller 10 can communicate with the other components of the voice signature server 2 to fulfil the requests from the client side (audio recording unit 1 of the user). The main requests that are considered hereafter concern uploading tagged voice samples from the voice signature unit 5 and speech to text requests from the voice enable unit 7. The controller can also be in charge of managing voice banks 12, user and device permissions.

The collected voice samples can be submitted to a sample validation by transmitting them to the validation unit 11.

Referring to Figure 3, there is shown a flowchart representing the interactions between the voice signature unit 3, the controller 10, the validation unit 11 and the voice bank 12. In this example, the connection between the voice signature unit 5 and the controller 10 has been simplified by omitting the interface 8 and the Voice Signature APIs 9.

At step 301, the user of an audio recording unit 1 is recording voice samples, which are then tagged as it has been previously explained with reference to Figure 2. For example, the user can record any speech for text independent systems, or predefined speech which follows a text script for text dependent systems. Each voice sample is then associated with one tag or with a set of tags, which characterize the environment: quiet, noisy, at home, in the street, voice commands, voice calls, etc. As previously explained, some of these tags (in particular noisy, quiet, at home) can be inferred from sensor values of the GPS 4.2, the accelerometer 4.4, the network location unit 4.3 or the noise level sensor 4.5. These tags will then be helpful for voice sample partitioning.

Assuming that a number *n* of tagged voice samples have been obtained, the voice signature unit 5 transmits the n tagged voice samples to the controller 10 at step 302. The tagged voice samples can be transmitted with an identifier of the user and an identifier of the audio recording unit of the user (this information being stored in the user database 4.7 as previously explained).

Upon reception of the n tagged voice samples, the controller 10 transmits them one by one to the sample validation unit 11.

Thus at step 303.1, the controller 10 transmits a first tagged voice sample to the validation unit 11. The voice sample is checked by the validation unit 11, in order to know whether a background noise level is too high or not, for example. The noise level of the voice samples can have been previously tagged based on data acquired by the noise level sensor 4.5 for example. Other criteria can also be used such as sample frequency or codec used for recording the voice samples. For example, WAV format can be preferred compared to MP3 format, as it is more difficult to extract voice features (i.e. pitch) from the MP3 format, which is compressed.

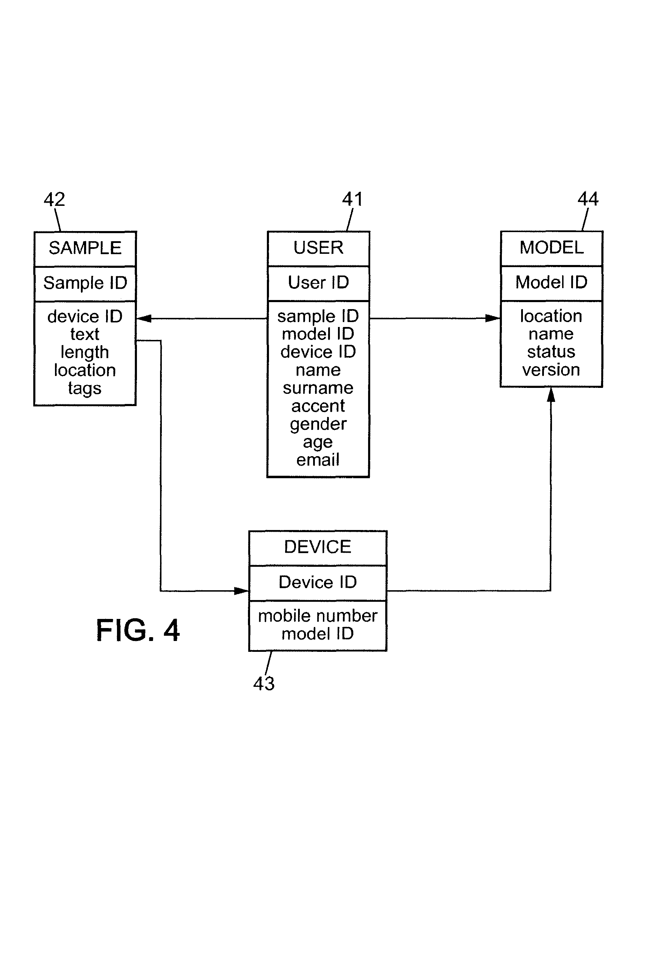

Upon validation of the first tagged voice sample, a confirmation is sent at step 304.1 from the validation unit 11 to the controller 10. At step 305.1, the controller 10 then sends the first tagged voice sample to the voice banks 12 for storage. In addition, the controller can send an identifier of the user and of the audio recording unit 1 used by the user to record the voice sample. The structure of the voice banks 12 will be further explained with reference to Figure 4.

When the first tagged voice sample is stored, the voice banks 12 send a confirmation to the controller 10, at step 306.1.

The same steps are then performed for all the tagged samples that have been received from the voice signature unit 5 of the audio recording unit 1.

The last tagged voice sample is sent from the controller 10 to the sample validation unit 11 at step 303.n. Upon validation of the last tagged voice sample, a confirmation is sent at step 304.n from the validation unit 11 to the controller 10. At step 305.n, the controller 10 then sends the last tagged voice sample to the voice banks 12 for storage. When the last tagged voice sample is stored, the voice banks 12 send a confirmation to the controller 10, at step 306.n.

At step 307, when all the tagged voice samples have been sent to the voice banks 12 by the controller 10, the controller 10 sends a notification to the voice banks 12 to indicate the end of the transmission of the tagged voice samples.

No restriction is attached to the order in which the previous steps are performed. For examples, the controller 10 can send all the tagged voice samples at the same time to the sample validation unit 11 and can then wait to receive the confirmation of validation before transmitting the validated tagged voice samples to the voice banks 12.

At step 308, the voice banks 12 can complete the received tagged voice samples with pre-registered user information, such as accent age, gender. This is an alternative or a complement to tagging in the audio recording unit 1 the acquired voice samples based on information delivered by the user database 4.7 concerning accent and gender of the user for example. Indeed, a profile of the user can be registered in the voice signature server 2, and in particular in the voice banks 12, so that the voice samples received from this user are automatically associated with the profile of the user (by establishing a correspondence with the identifier of the user which has been sent at step 302).

After performing step 308, the voice banks 12 send a confirmation at step 309 to the controller 10. The controller 10 can then send to the voice signature unit 5 statuses of the tagged voice samples (whether they have been validated and stored or not).

Referring now to Figure 4, there is shown a database structure of the voice banks 12.

The goal of the voice banks 12 is to keep the voice samples collected from different users, in order to be used later for text to speech applications, speech to text applications or biometric services. The benefit for the user is to be able to use the voice banks 12 among several voice services, which need voice samples in order to train their acoustic models (speech recognition models, speech synthesis models or biometric models). Most of the voice services today (speaker dependent for example) can require a training step in which voice samples are used to train the acoustic model. However, according to the systems of the prior art, acoustic models and voice samples are not shared between voice services and the user needs to go through it each time a new voice service is used.

Considering voice banks 12 according to embodiments of the invention, voice samples can be categorized based on the age, gender, accent, location, environment of the user. Thanks to these additional tags, which can be manual or automatic, the invention enables to classify voice samples regarding to specific criteria such as the accent or the environment (calm, noisy, others), in which the voice samples have been recorded.

Voice banks 12 can for example be dedicated to a plurality of users. On Figure 4, there is shown four classes of voice banks 12. The voice banks 12 then contain a user class 41, a sample class 42, a device class 43 and a model class 44.

The user class 41 registers all personalized voice profiles of the users, each voice profile being identified by a user identifier. For each user, a voice bank 12 contains a set of sample identifiers to access the voice samples of the user in sample class 42, a set of model identifiers to access the acoustic models of the user in the model class 44, device identifiers to access the audio recording units of the user in the device class 43. The user class 41 can also contain for each user the name, the surname, the accent, the gender, the age and the email of the user.

The sample class 42 contains voice samples for each user of the voice banks 12. Each sample is identified by the sample identifier (which is stored in the user class 41) and the sample class 42 contains for each sample a device identifier (to indicate the audio recording unit with which the voice sample has been recorded), text to be associated with the voice sample, the length of the voice sample, which can be expressed in minutes and seconds for example, the location of the user during recording the voice samples and other tags.

The device class 43 contains the audio recording units used by the users of the voice banks 12 to record the voice samples. Each audio recording unit is identified by the device identifier (which is stored in the user class 41) and the device class 43 contains for each audio recording unit a mobile number to reach the audio recording unit (in the case of a mobile phone for example) and a model identifier to access in the model class 44 the acoustic models of the user of this audio recording unit.

The model class 44 enables to access the model database 15 represented on Figure 1 and enables in particular to access to each acoustic model by means of the model identifier (which is stored in the user class 41). For each acoustic model, the model database 15 contains a location, a name, a status and a version of the acoustic model.

When a given number of voice samples have been added in the voice banks 12, for a specific group of people, representative of a generic voice profile (i.e. people with the same accent, French accent for example), the controller 9 can activate a speaker adaptation process according to some embodiments of the invention. The group of people can be defined by determining a generic voice profile, based on one or several tags for example (in the given example, the tag "French accent"). The goal of this process is to select the voice samples from the voice banks 12 which share the same voice features as the group of people, meaning the voice samples being associated with the tag "French accent". Then, these voice samples can be used to update each acoustic model of the users within the same group. These voice samples can also be used to construct a generic voice model dedicated to a generic voice profile "French accent". The generic voice profile can then be used to construct a personalized acoustic model of a new user, who matches the voice profile and who provides only few voice samples. The generic voice profile is then updated based on these few voice samples to obtain the personalized acoustic model of this new user.

According to this process, the right voice samples are selected from the voice banks 12 by checking the tags associated with the voice samples and then a specific voice sample partition is built which gathers all the selected voice samples. The partition can then be used by the adaptation unit 14 to update every acoustic models of the group (voice profile) or to create a generic acoustic model for this group.

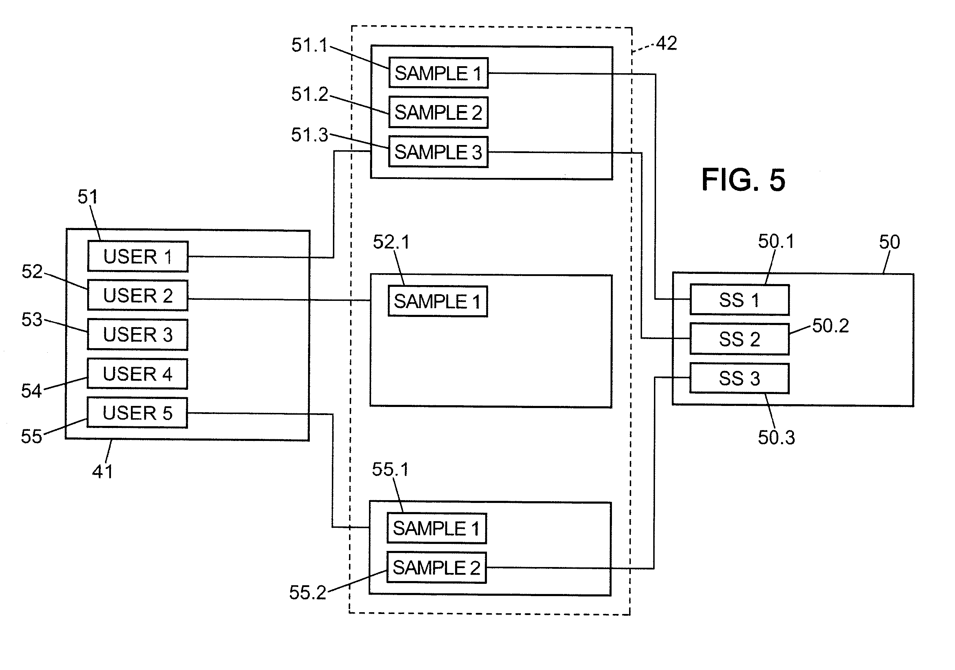

Referring to Figure 5, there is shown a system for constituting a sample partition comprising the voice banks 12 and the selection unit 13, according to some embodiments of the invention.

The voice banks 12 contain the user class 41, the sample class 42 and the selection unit 13 contains a partition 50.

The user class 41 contains individual voice profiles for five users, i.e. a first voice profile 51 of a first user, a second voice profile 52 of a second user, a third voice profile 53 of a third user, a fourth voice profile 54 of a fourth user and a fifth voice profile 55 of a fifth user.

In what follows, we consider constructing a partition for a generic voice profile "French accent", the generic voice profile being associated with the tags "French accent" and "at home".

As already explained with reference to Figure 4, the voice profile of a user can contain his accent, and from this accent, it can be deduced that all voice samples of this user are tagged with this accent. Thus, assuming that only first, second and fifth users are French, the first, second and fifth voice profiles 51, 52 and 55 are selected to build the partition for the generic voice profile "French accent".

The sample class 42 contains voice samples 51.1, 51.2 and 51.3 for the first user, voice samples 52.1 for the second user and voice samples 55.1 and 55.2 for the fifth user.

The voice sample 51.1 is tagged with the tags "conversation" for the recording mode and "at home" for the location.

The voice sample 51.2 is tagged with the tags "voice commands" for the recording mode and "in the car" for the location.

The voice sample 51.3 is tagged with the tags "dictation" for the recording mode and "at home" for the location.

The voice sample 52.1 is tagged with the tags "conversation" for the recording mode and "at home" for the location.

The voice sample 55.1 is tagged with the tags "dictation" for the recording mode and "in the car" for the location.

The voice sample 55.2 is tagged with the tags "voice commands" for the recording mode and "at home" for the location.

Because the generic voice profile "French accent" for which a partition is to be constructed is associated with the tags "French accent" and "at home", the voice samples 51.1, 51.3 and 55.2 are selected to build the partition 50. Thus, the partition 50 contains the voice samples 50.1, 50.2 and 50.3, which respectively correspond to voice samples 51.1 and 51.3 of the first user and voice sample 55.2 of the fifth user.

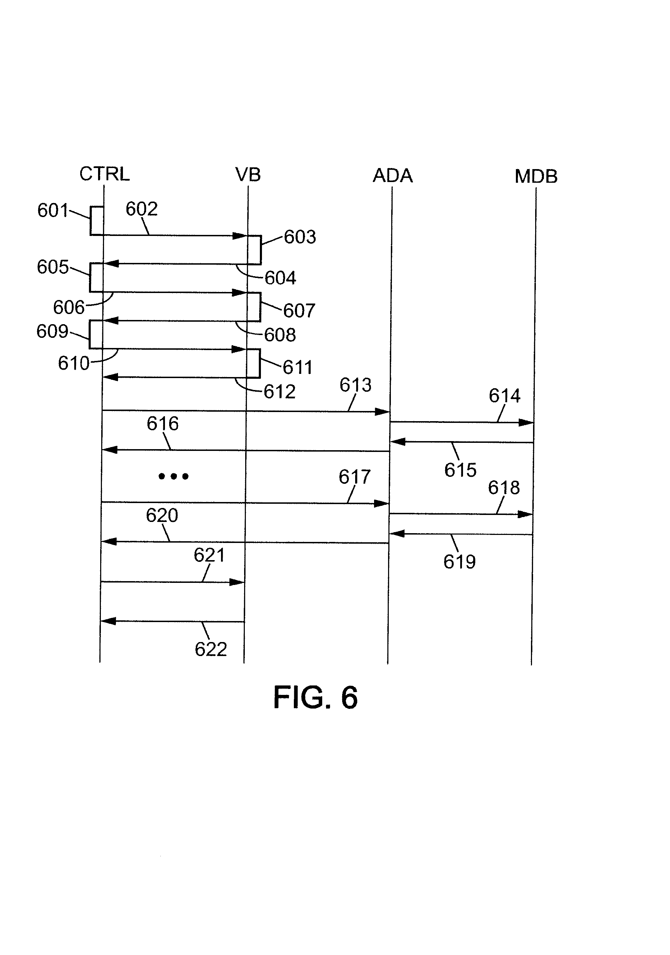

The partition 50 can then be used by the adaptation unit 14 to update every acoustic models matching the generic voice profile "French accent", that is to say the acoustic model of the first, second and fifth users, who are French. The partition can also be used to construct a generic acoustic model corresponding to the generic voice profile "French accent". The construction of the acoustic models will be further detailed with reference to Figure 6.

The previous example has been considered for the sake of better understanding and to show how voice samples from the voice banks 12 are shared among users in order to improve their personalized acoustic models (speaker dependent) or to construct a generic acoustic model (speaker independent). After the previous example, the acoustic model of the French accent speakers can be improved, based on the voice samples from French accent speakers (first, second and fifth users) in quiet environment (i.e. at home).

The voice sample partition can then be used to update the acoustic model of each user (first, second and fifth users) of the selected group who share a common voice characteristic (French accent). Compared to a classic training process of a speech recognition system, not only the personal voice samples of a first user are used to update the acoustic model of the first user but also those from the people of the same group (matching the same voice profile). The benefit is to 'train' any acoustic model in a faster way, because more voice samples are acquired at the same time.

Thus, according to the invention, to improve the acoustic model of a first user, it is possible to use voice samples from other users, unless they share the same voice characteristics such as:
- the accent : French, English IK, Scottish, Irish, Indian, etc;
- the gender : this parameter can be relevant as it is difficult to mix together voice samples from male and female voices;
- the environment: home, street, car, train, others. Depending on the environment, a voice sample could be affected by the background noise level. If the noise level is too high (Signal to Noise Ratio level), the voice sample is not relevant to construct or adapt the acoustic model, unless specific models in noisy environments are desired (in the car, in the street).

Referring now to Figure 6, there is shown a flowchart representing the interactions between the controller 10, the voice banks 12, the adaptation unit 13 and the model database 15.

The following steps are continuously iterated, according to some embodiments of the invention, to improve the acoustics models stored in the voice signature server 2 based on new tagged voice samples that are received from audio recording units 1 of users.

At step 601, voice profiles are constituted in the controller 10 based on one or several tags. Then, for a given voice profile, the controller 10 requires at step 602 a length of new voice samples from the voice banks 12, which match the voice profile, meaning which are associated with the tags representative of the voice profile.

The voice banks 12 can calculate at step 603 the total length of the new voice samples matching the voice profile specified by the controller 10. The length can be expressed in minutes and seconds for example.

The voice banks 12 then transmit at step 604 the calculated total length in minutes to the controller 10. The controller can then check at step 605 if the total length exceeds a given threshold. If this is the case, the controller 10 can request at step 606 a list of all the users sharing the same voice features, such as the accent for example, or for which voice samples are associated with a tag matching the given voice profile.

The voice banks 12 then determine the required list of users at step 607 and transmit it to the controller at step 608.

The controller 10 then decides at step 609 to update all the acoustic models for the users of the list.

The controller 10 requires at step 610 all the new voice samples of the users sharing the voice features defined by the given voice profile, or all the voice samples that are associated with a tag matching the given voice profile.

The voice banks 12 determine at step 611 the required voice samples and transmit them to the controller 10.

Then, for each user of the list, the controller 10 sends the identifier of the user and all the required new voice samples to the adaptation unit 14.

Thus, at step 613, an identifier of a first user from the list is transmitted to the adaptation unit 14 with all the required new voice samples. The adaptation unit 14 then accesses the model database 15, in order to update the acoustic model of the first user based on the required new samples at step 614. The adaptation unit 14 uses a set of tools which depends on the speech recognition technologies in use, such as Nuance or Hidden Markov Model Toolkit for example. The tools are used to adapt the acoustic model of a speaker dependent speech recognition model from voice samples. The adaptation of the acoustic model is crucial for speaker dependent models, as it influences directly the overall performance of the speech recognition engine.

Upon storage of the updated acoustic model for the first user, the model database 15 sends a confirmation to the adaptation unit 14 at step 615.

The updated acoustic model status of the first user is then transmitted from the adaptation unit 14 to the controller 10 at step 616.

The steps 613 to 616 are performed for all the users of the list.

Finally, at step 617, an identifier of the last user from the list is transmitted to the adaptation unit 14 with all the required new voice samples. The adaptation unit 14 then accesses the model database 15, in order to update the acoustic model of the last user based on the required new samples at step 618.

Upon storage of the updated acoustic model for the last user, the model database 15 sends a confirmation to the adaptation unit 14 at step 619.

The updated acoustic model status of the last user is then transmitted from the adaptation unit 14 to the controller 10 at step 620.

Then, the sample status and model status are updated at step 621 by the controller 10 in the voice banks 12, and in particular in the sample class 42 and in the model class 44 respectively.

At step 622, the voice banks 12 send a confirmation that the statuses have been updated, to the controller 10.

Then, as soon as a personalized acoustic model of a first user has been trained as previously explained, the acoustic model can be used by the first user. Indeed, the voice signature server 2 hosts:
- the voice banks 12 where all the users' voice samples are stored and can be used by any audio recording device 1 of a user;
- the personalized acoustic models, which can be used from any audio voice enable service.

This personalization aspect is interesting for the user as the voice samples to build the speech models are not hosted by the audio recording devices or speech systems, but by the voice banks 12. It means that the same personal voice samples can be used by several speech systems. In addition, because of the tags, it is easy to select which voice samples have to be selected for constructing a personalized voice model or for constructing a generic voice model (for example in noisy environment, voice commands only, samples recorded in the street, etc).

Then, when a user of the audio recording unit 1 records speech for a speech to text application for example, the speech is recorded by the microphone 3 and forwarded to the voice enable unit 7. The speech is then transmitted via the interface 8 and the voice signature APIs 9 to the controller 10. The controller 10 transmits it to the STT engine 16. The STT engine 16 then accesses the personalized voice model of the user in the model database 15, in order to transcript the speech into corresponding text. The corresponding text is then forwarded back to the audio recording unit 1 for a display on the GUI 6 for example.

Thus, the present invention enables to improve the personalization aspect of the acoustic model for users. Indeed, the voice samples to build the speech models are not hosted by the audio recording unit 1, but by the voice banks 12 of the voice signature server 2. The voice banks 12 enable to share voice samples from different users. The voice banks 12 data structure permits to associate specific tags, such as the speaker accent, gender, age, location where the voice samples have been recorded, the surrounding environment (noisy, quiet) and the recording context (at home, in the street, in the car, etc). All these tags permit to group all the voice samples into partitions of voice samples, which share common tags (same accent, same location, same environment, etc), which can be chosen to represent a given voice profile. These voice sample partitions can be used to adapt the acoustic models of a group of people matching the voice profile, and can be used to create a generic acoustic model for this voice profile.

One particular aspect of interest can be the voice accent. Using and sharing voice samples from one particular group of people (for example Indian people) can improve the speaker adaptation process of their personal acoustic models, which are speaker dependent, and can enable to determine a generic voice model for the voice profile "Indian accent". Then, instead of only using a user's voice samples to adapt the acoustic model of this user, the present invention proposes to use other voice samples from other people who share the same voice characteristics (for example French or Indian accent). The benefit of such technique is to improve the adaptation time of the speech models.

Furthermore, the present invention allows more flexibility for the user. Indeed, there is a need to train the speech recognition models in order to improve the performances (speaker dependent systems enable better recognition performances compared to speaker independent system). Recording of voice samples can be perceived by the user as being a constraint. According to the invention, a user can own his personal voice samples previously recorded in different environments (at home, in the street, etc) and conditions (noisy, quiet, background speakers, etc). The voice banks 12 can be used by several speech systems; such as speech synthesis systems, speech recognition systems, voice biometrics systems or others, in order to build specific acoustic models, which can be speaker dependent or independent. Thanks to the tags, associated with each voice sample, it is possible to build and train acoustic models for noisy conditions only or dedicated to one user only (speaker dependent). As a consequence, when a user wants to use a new dictation system or voice command based service, voice banks 12 can be used to adapt his acoustic models without going through another training step.

The present invention also permits to avoid voice features calculations. For the voice samples partitioning step, no voice features calculation is used in order to compare every voice samples all together (ex: accent, noise, etc.). As voice samples are already associated with tags, it is easy to group them based on different criteria which sometimes cannot be calculated. For example, statistic calculations do not enable to determine if a user is at home, in the street or in the car. Tags are really advantageous in order to better adapt speech models depending on the purpose, for example for speech models dedicated to one user or in noisy conditions.

This invention does not focus on the already existing speech recognition technologies, but only the fact that we intend to:
- collect voice samples which are manually or automatically associated with tags which characterize the environment (at home, in car, etc.), the conditions (noisy, quiet, background speaker, etc.) and the context (voice commands, call, dictation, etc.) of the voice records;
- setup voice banks on the network to keep personal voice samples which are later used by speech systems in order to adapt or build specific acoustic models depending on specific criteria or in order to build generic acoustic models;
- to facilitate voice samples partitioning by using already existing tags associated with voice samples stored in the voice banks, instead of complex signal processing calculation, such as distance calculation between cepstral coefficients.

Thus, one of the main benefit of this invention is the ability to build in an efficient way, speaker dependent speech models that takes less time to adapt as it can benefit from voice samples with common voice characteristics (ex: accent) among a group of people (ex: French, English, etc.) as opposed to voice samples from a single user. As a result, minimum speech recognition error rate should be reached faster and overall speech recognition performances better perceived by the users.

## Claims

1. A method for generating a tagged voice sample carried out by an audio recording unit (1), the method comprising:
- a step of recording a voice sample from a user of the audio recording unit;
- a step of suggesting at least one tag to be associated with said voice sample to the user;
- upon selection by the user of a suggested tag, a step of associating at least said selected tag with said voice sample.

2. The method according to claim 1, wherein the audio recording (1) unit further comprises at least one sensor (4), said sensor being adapted to acquire sensible data and wherein the suggested tag is determined based on the sensible data.

3. The method according to claim 2, wherein the sensible data is an environmental noise level.

4. The method according to claim 3, wherein if the environmental noise level is above a predefined threshold, the previous steps of the method are restarted.

5. The method according to claim 2, wherein the sensible data is relative to a mobility of the audio recording unit (1), and wherein the suggested tag relates to a location of the user.

6. The method according anyone of claims 1 to 5, wherein a profile of the user is stored on said audio recording unit (1), said profile comprising at least one personal tag associated with said user and wherein the method further comprises associating the personal tag with said voice sample.

7. The method according to anyone of claims 1 to 6, wherein the audio recording unit (1) is adapted to record a voice sample according to a plurality of modes, each mode being associated with a mode tag, wherein the method comprises recording a voice sample from a user of the audio recording unit according to a first mode among the plurality of modes and wherein the mode tag of said first mode is associated with said voice sample.

8. The method according to anyone of claims 1 to 7, wherein the audio recording unit further comprises at least one sensor (4), said sensor being adapted to acquire sensible data, and wherein the method further comprises inferring an activity based on said sensible data, determining a detected tag based on the inferred activity of the user and associating said detected tag with said voice sample.

9. A computer program product recorded on a storage medium and executable by a computer in the form of a software agent including at least one software module setup to implement the method according to any one of claims 1 to 8.

10. An audio recording unit (1) comprising :
- means for recording (3) a voice sample from a user of said audio recording unit;
- means for suggesting (4.8) at least one tag to be associated with said voice sample to the user;
- means for associating (5), upon selection of a tag by the user, at least said selected tag with said voice sample.
